# EUROPEAN PATENT SPECIFICATION

(11) **EP 1 014 007 B1**
(45) Date of publication and mention of the grant of the patent: **04.06.2003**
(21) Application number: 99204438.8
(22) Date of filing: 21.12.1999
(51) Int. Cl.: F24F 6/14

(54) **Wet air scrubber**
Apparat zum Reinigen feuchter Luft
Epurateur d'air humide

(30) Priority: 24.12.1998 IT MI982825
(43) Date of publication of application: 28.06.2000
(73) Proprietor: Edoardo Lossa S.p.A., 20090 Cesano Boscone, Milan (IT)
(72) Inventor: Gherzi, Giuseppe, 8702 Zollikon (CH); Bevilacqua, Leopoldo, 8002 Zurigo (CH)
(74) Representative: De Gregori, Antonella

(56) References cited:
- EP-A- 0 301 212
- GB-A- 2 180 776
- JP-A- 52 101 855
- US-A- 5 425 902
- US-A- 5 620 503

## Description

The subject of this invention is a wet air scrubber, designed to be applied in particular to ventilation and air-conditioning units for use in civil and industrial installations.

The modern technology used for manufacturing processes in general and in some sectors in particular requires precise control of the level of saturation of the air output from special types of apparatus called air scrubbers. In particular, for technical and financial reasons, the textile and paper industries saturate the airstream to be conveyed to workplaces as completely as possible.

The units installed to date fully perform the required task in technical terms. However, modifications and improvements in the components of these units are necessitated by the development of markets, which increasingly require reductions in installation and maintenance costs, and by the need to reduce running costs. Environmental protection issues, including a strong need for energy saving, influence design decisions, which must satisfy the priority technical objectives.

The plant engineering world has offered different responses to this problem, mainly revolving around a special configuration of the system that conveys the airstream to the exchange/contact area between the airstream and the fluid involved in the process, and the use of high pressures to nebulise the water injected.

A recent known solution involves air scrubbers operating at an air transit speed of between 5 and 6 metres per second which use a special apparatus that generates a particular range of wavelengths designed to promote contact and homogenisation in the exchange process between airstream and fluid. These scrubbers are assisted by a high-pressure pump that operates in a range of pressures between 80 and 120 bars.

Such a technical solution presents the disadvantage of creating considerable cleaning and maintenance problems, as well as high manufacturing costs. In addition, the nozzles are fitted in such a way as to inject the water in the same direction as the airstream to be treated.

Another type of scrubber which operates in the same pressure range as the previous one uses facing injector elements. However, although this solution is cheap to manufacture, it does not allow accurate spraying of the fluid injected when small deposits form at the end of the injector aperture.

In both these cases the scrubber has to be fitted with an airflow straightener at the scrubber intake.

Although these solutions have produced a considerable reduction in the size of scrubber units, and in some cases partial elimination of the water recirculation tank and all the associated running and hygiene problems, they still present large pressure drops. This means that high running costs are involved in the process of transit of the air treated and in increasing the water injection pressure.

Refining the saturation process requires the design of technical solutions in which the exchange of water particles with the surrounding airstreams is as uniform and constraining as possible.

Although the solutions proposed to date meet the saturation parameter, they present the drawback that they are expensive to manufacture and above all difficult to clean, with adverse consequences on the maintenance schedule. This latter parameter is of crucial importance, especially in industrial plants, which are exposed to problems of residual dust and continuous service, so that lengthy maintenance operations are unacceptable.

In addition, consumption is high and needs to be improved as far as possible for the purpose of energy and water saving.

The object of the present invention is to provide an air scrubber for civil and industrial uses which treats the air with a partial saturation, total saturation or supersaturation process that guarantees strict compliance with the required thermohygrometric parameters.

A further object is to achieve a high degree of energy saving by optimising and reducing pressure drops in both airdraulic andhydraulic terms.

A further object is to reduce the size of the said scrubber, thereby facilitating integration and installation of the unit in which it is used into the buildings and plants involved, especially industrial buildings and plants.

A further object is to facilitate maintenance of the said scrubber, and to provide a configuration designed with the smallest possible number of parts exposed to external contaminants.

This and other purposes are accomplished by a wet air scrubber as specified in claim 1.

Further characteristics will be described in the annexed claims.

The features and advantages of a wet air scrubber in accordance with this invention will be apparent from the following more particular description, given by way of example but not of limitation, by reference to the accompanying schematic drawings in which:
- figure 1 is an elevational view showing a cross-section of part of a wet air scrubber constructed in accordance with the invention
- figure 2 is an enlarged lateral elevational view of one of the spray nozzles, with corresponding impacter, fitted on the bank of nozzles in the scrubber.

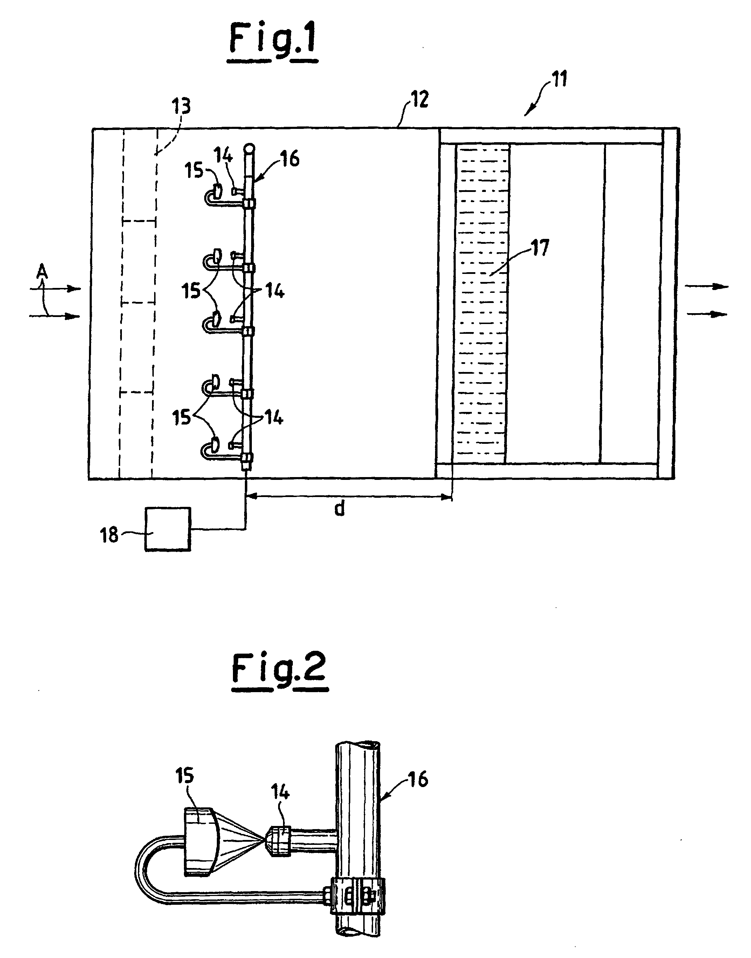

Figure 1 shows a wet air scrubber 11 which is used to humidify and cool airstreams destined for ventilation and air-conditioning installations designed and used for the civil, services and industrial sectors.

The said air scrubber 11 is used in the context of installations totally controlled by measurement, control and regulation units.

Air scrubber 11 comprises a casing 12, made of various types of ferrous, non-ferrous and/or synthetic materials, which is dimensioned in accordance with this invention in such a way as to achieve a high transit speed but low pressure drops. The scrubber in accordance with the invention is generally made without a transit airflow straightener, indicated in figure 1 by broken line 13.

Casing 12 houses a water-spraying system with variable flow rate and pressure, which depend on the needs of the final application. In this spray system, the direction of injection of spray nozzles 14 is in countercurrent to the direction of the airstream treated, indicated by arrows A.

An arrangement of impacting elements 15, which will vary on the basis of the three Cartesian coordinates and the flow rate/pressure parameters, is fitted opposite spray nozzles 14. A suitable distance "d" between one bank 16 of nozzles 14 and a successive mist eliminator 17 must be identified on the basis of the transit speed of the airstream treated and the flow rate/pressure of the air sprayed.

The final mist eliminator 17 will obviously have a configuration coordinated with the parameters mentioned above, and will be suitable for operation with both a saturated and a supersaturated airstream. Nozzles 14 of bank 16 must be supplied by a water injection pump 18 connected to the said set of spray nozzles and said pump can be of centrifugal or piston type, in a pressure range suitable to the field of use required.

Spray nozzles 14 can be grouped in blocks configured to suit the requirements of the final application. The air scrubber may have any shape, e.g. cylindrical.

Efficient nebulisation of the water injected through the nozzles is accomplished not only by the countercurrent arrangement of the spray nozzles but also by the presence of special impacters 15.

The greatest novelty and originality of this invention thus relates to nozzles 14 and impacters 15, which are fitted in a configuration having the following characteristics:
- spray nozzle with conical/peripheral or conical/integral effect
- angle of incidence of spray between 60° and 120°
- impacter with elliptical/circular profile, and diameter ranging between 15 and 50 mm
- distance between end of nozzle and impacter which varies between 15 and 45 mm, on the basis of the fluid injection pressure and the angle of incidence.

This parametric composition, in the presence of a countercurrent arrangement of the nozzles, produces a particular nebulising effect on the fluid injected, which in turn produces a nebulising profile in the direction of flow of the airstream with an elliptical/spherical shape and a large area that maximises saturation or supersaturation of the airstream treated.

This particular selection of components allows the elimination of airflow straightener 13, which would otherwise be necessary, as in all the other constructions.

Elimination of the airflow straightener or turbulence generator considerably reduces the pressure drops caused by transit of the airstream. This leads to a reduction in manufacturing and running costs. The structure described above is considerably simplified, thereby facilitating maintenance operations, with consequent financial advantages.

The profile of impacter 15 is designed to increase the contact yield between the nebulised water and the airstream in transit. A set of field tests has demonstrated that this particular nozzle configuration allows the transit speed of the airstream to be further increased to values between 6 and 9 m/sec, while pressure drops caused by airstream transit remain under 150 Pa. This invention thus rationalises construction, reduces manufacturing costs and improves the housing conditions of the invention, whether it rests on a surface or is wall-mounted, with the consequent advantages relating to hanging loads inside the building, whatever its use. A special turbulence generator can also be installed.

The type and choice of components for this air scrubber were also dictated by the following priorities:
- to configure a system of introducing the airdraulic flow into the scrubber which has aerodynamic characteristics such as to minimise pressure drops caused by transit of the airstream treated, and which meets the requirements of the application without the need for an airflow straightener
- to configure a water injection system installed in countercurrent to the airstream which facilitates fluid/airstream contact so as to allow different levels of saturation and supersaturation
- to configure the three-dimensional coordinates of the airstream/fluid exchange chamber, in this specific case the distance between the nozzle banks, which varies in accordance with the requirements of the installation and the application, and the width/height ratio of the treatment chamber, in order to optimise operation, as required by each application, in the presence of airstream transit speeds of up to 9.0 m/sec
- to create the conditions required to obtain optimum, thermohygrometrically stable nebulisation using particular nozzles coupled to special accessories designed to increase the area of contact between the airstream and the fluid, and thus achieve the maximum water and energy saving
- to avoid recirculation of the water injected, and at the same time to minimise the flow rate of the water injected
- to configure the invention so as to allow the use of a wide range of nebulising pressures, from approx. 10 to over 60 bars, depending on the needs of the installation and the parametric priorities required by the end user
- to allow a turbulence generator, designed to mix the fluid injected and the airstream in transit in a special way, to be built into this invention upstream of the spray nozzles.

Thus the air scrubber in accordance with the invention constitutes a compact unit able to produce and maintain an airstream in transit through the said unit which presents conditions of total saturation, partial saturation or supersaturation. The thermohygrometric conditions of the said airstream thus present characteristics of stability and uniformity able to meet the requirements of industrial manufacturing processes and premises designed for industrial, services and civil use.

## Claims

1. Wet air scrubber designed to humidify and cool airstreams used in ventilation and air-conditioning installations designed and manufactured for the civil, services and industrial sectors, comprising a casing (12) in which a water-spraying system with a variable flow rate and pressure is housed, the water-spraying system comprising at least one bank (16) of nozzles (14) installed in countercurrent to the direction of flow of the airstream to be treated, a number of impacters (15) fitted opposite to the nozzles (14) and a mist eliminator (17) installed downstream of the said bank of nozzles (16) at a distance (d) that varies according to the transit speed of the airstream treated and the flow rate/pressure of the water sprayed; and a water injection pump (18) being connected to the said set of spray nozzles (14) in a pressure range suitable for the required field of use.

2. Air scrubber as claimed in claim 1, **characterised in that** the arrangement of the said impacters (15) varies on the basis of the three Cartesian coordinates and the flow rate/pressure parameters.

3. Air scrubber as claimed in claim 1, **characterised in that** the said impacters (15) have a configuration and a profile dimensioned so as to increase the coefficient of contact between the airstream and the fluid injected.

4. Air scrubber as claimed in claim 3, **characterised in that** the distance between the said impacters (15) and the said nozzles (14) varies on the basis of the operating pressure values of the fluid, which said values are assigned on the basis of the operation for which the said scrubber is used.

5. Air scrubber as , claimed in claim 1, **characterised in that** an airflow straightener is fitted upstream of the said bank (16) of nozzles (14).

6. Air scrubber as claimed in claim 1, **characterised in that** the quantity of water injected into the said nozzles (14) varies on the basis of the requirements of measurement, regulation and control organs governing the ventilation and/or air-conditioning plant in which the said scrubber is fitted.

7. Air scrubber as claimed in claim 1, **characterised in that** the said casing (12) is made of various types of ferrous, non-ferrous and/or synthetic materials, and is dimensioned in such a way as to achieve a high transit speed but low pressure drops.

8. Air scrubber as claimed in claim 1, **characterised in that** it includes a turbulence generator on the air intake side with such a configuration as to create special conditions of turbulence downstream of the said generator, so as to create a special type of contact and mixing between the air/water vectors and minimise pressure drops caused by the passage of the airstream to be treated through the said generator.

9. Air scrubber as claimed in claim 1, **characterised in that** special mist eliminators, coordinated in the design of the unit and the arrangement of the parts inside the said casing (12), are installed downstream of the said spray nozzles (14).

10. Air scrubber as claimed in claim 1, **characterised in that** it includes turbulence generators for special applications, the said generators having different configurations chosen on the basis of different combinations of parameters, such as the speed of the airstream treated, the pressure of the fluid conveyed to the said spray nozzles, and the energy balance assigned to the said scrubber.

11. Air scrubber as claimed in claim 1, **characterised in that** the said spray nozzles (14) are grouped in blocks, configured in accordance with the requirements of the final application.

12. Air scrubber as claimed in claim 1, **characterised in that** it has a cylindrical shape.

## Patentansprüche

1. Apparat zum Reinigen, feuchter Luft, der dazu ausgelegt ist, Luftströme zu befeuchten und zu kühlen, die in Vennlations- und Klimaanlagen-Installationen verwendet werden, welche für den öffentlichen Dienst und den Indushiesektor ausgelegt und hergestellt wurden, mit einem Gehäuse (12), in welchem ein Wassersprühsystem, mit variabler Strömungsrate und Druck untergebracht ist, wobei das Wassersprühsystem mindestens eine Bank (16) aus Düsen (14) umfasst, die im Gegeostrom zu der Richtung der Strömung des zu behandelnden Luftstroms installiert sind, wobei eine Anzahl von Stoßelementen (15) gegenüber den Düsen (14) angesetzt sind, und ein Nebel-Eliminator (17) stromabwärts der Bank der Düsen (16) in einem Abstand (d) installiert ist, der gemäß der Durchgangsgeschwindigkeit des behandelten Luftstroms und der Strömungsrate/dem Druck des gesprühten Wasser variiert; und mit einer Wassereinspritzpumpe (18), die mit dem Satz der Sprühdüsen (14) verbunden ist, in einem Druckbereich, der für das benötigte Verwendungsgebiet geeignet ist

2. Luftreinigungsapparat nach Anspruch 1, **dadurch gekennzeichnet, dass** die Anordnung der Stoßelemente (15) auf der Basis der drei kartesischen Koordinaten und der Strömungsraten/Druckparameter variiert.

3. Luftreinigungsapparat nach Anspruch 1, **dadurch gekennzeichnet, dass** die Stoßelemente (15) eine Konfiguration und ein Profil aufweisen, das so dimensioniert, dass der Kontaktkoeffizient zwischen dem Luftstrom und dem eingespritzten Fluid erhöht wird.

4. Luftreinigungsapparat nach Anspruch 3, **dadurch gekennzeichnet, dass** der Abstand zwischen den Stoßelementen (15) und den Düsen (14) auf der Basis der Betriebsdruckwerte des Fluides variiert, wobei die Werte auf der Basis des Betriebes zugeordnet werden, für welchen der Reinigungsapparat verwendet wird.

5. Luftreinigungsapparat nach Anspruch 1, **dadurch gekennzeichnet, dass** ein Luftstrom-Geradrichter stromaufwärts von der Bank (16) der Düsen (14) angesetzt ist.

6. Luftreinigungsapparat nach Anspruch 1, **dadurch gekennzeichnet, dass** die Menge des in die Düsen (14) eingespritzten Wassers auf der Basis der Anforderungen von Messungs-, Regelungs- und Steuerungsorganen variiert, welche die Ventilations- und/oder Klimaanlage regeln, in welche der Reinigungsapparat eingesetzt ist

7. Luftreiniguagsapparat nach Anspruch 1, **dadurch gekennzeichnet, dass** das Gehäuse (12) aus verschiedenen. Typen von Eisen-, Nicht-Eisen- und/oder synthetischen Materialien hergestellt und so dimensioniert ist, dass eine hohe Durchgangsgeschwindigkeit aber geringe Druckabfälle erzielt werden.

8. Luftreinigungsapparat nach Anspruch 1, **dadurch gekennzeichnet, dass** er einen Turbulenzerzeuger an der Lufteinbringseite aufweist, mit einer solchen Konfiguration, dass spezielle Turbulenzbedingungen stromabwärts von dem Generator erzeugt werden, um so einen speziellen Typ von Kontakt und Vermischung zwischen den Luft/Wassewektoren zu erzeugen und Druckabfälle zu minimieren, die durch den Durchgang des zu behandelnden Luftstromes durch den Generator erzeugt werden.

9. Luftreinigungsapparat nach Anspruch 1, **dadurch gekennzeichnet, dass** spezielle Nebel-Eliminatoren, die mit der Ausgestaltung der Einheit und der Anordnung der Teile innerhalb des Gehäuses (12) koordiniert sind, stromabwärts von den Sprühdüsen (14) installiert sind.

10. Luftreinigungsapparat nach Anspruch 1, **dadurch gekennzeichnet, dass** er Turbulenzerzeuger für spezielle Anwendungen umfasst, wobei die Erzeuger unterschiedliche Konfigurationen aufweisen, die auf der Basis unterschiedlicher Kombinationen von Parametern ausgewählt werden, wie zum Beispiel der Geschwindigkeit des behandelten Luftstroms, dem Druck des Fluids, das durch die Sprühdüsen gefördert wird und der Energiebilanz, die dem Reinigungsapparat zugeordnet wird.

11. Luftreinigungsapparat nach Anspruch 1, **dadurch gekennzeichnet, dass** die Sprühdüsen (14) in Blöcken gruppiert sind, die gemäß den Anforderungen der schließlichen Anwendung konfiguriert sind.

12. Luftreinigungsgerät nach Anspruch 1, **dadurch gekennzeichnet, dass** es eine zylindrische Form hat.

## Revendications

1. Epurateur d'air humide conçu pour humidifier et refroidir des veines d'air utilisées dans des installations de ventilation et de climatisation conçues et fabriquées pour les secteurs civils, de services et industriels, comprenant un boîtier (12) renferment un système de pulvérisation d'eau à débit et pression variables, le système de pulvérisation d'eau comprenant au moins une rangée (16) de buses (14) montées à contre-courant de la direction du flux de la veine d'air à traiter, un certain nombre de compteurs de poussière (15) montés en face des buses (14) et un dé-brumisateur (17) monté en aval de ladite rangée de buses (16) à une distance (d) qui varie en fonction de la vitesse de transit de la veine d'air traitée et du débit/de la pression de l'eau pulvérisée ; et une pompe à injection d'eau (18) étant reliée audit jeu de buses de pulvérisation (14) dans une plage de pressions appropriée pour le domaine d'utilisation requis.

2. Epurateur d'air selon la revendication 1, **caractérisé en ce que** l'agencement desdits compteurs de poussière (15) varie sur la base des trois coordonnées cartésiennes et des paramètres de débit/pression.

3. Epurateur d'air selon la revendication 1, **caractérisé en ce que** lesdits compteurs de poussière (15) ont une configuration et un profil dimensionnés de façon à augmenter le coefficient de contact entre la veine d'air et le fluide injecté.

4. Epurateur d'air selon la revendication 3, **caractérisé en ce que** la distance entre lesdits compteurs de poussière (15) et lesdites buses (14) varie sur la base des valeurs de pression d'utilisation du fluide, lesdites valeurs étant assignées sur la base de l'opération pour laquelle ledit épurateur est utilisé.

5. Epurateur d'air selon la revendication 1, **caractérisé en ce qu'**un redresseur de flux d'air est monté en amont de ladite rangée (16) de buses (14).

6. Epurateur d'air selon la revendication 1, **caractérisé en ce que** la quantité d'eau injectés dans lesdites buses (14) varie sur la base des besoins des organes de mesure, de régulation et de commande régissant l'installation de ventilation et/ou de climatisation dans laquelle est monté ledit épurateur.

7. Epurateur d'air selon la revendication 1, **caractérisé en ce que** ledit boîtier (12) est réalisé dans divers types de matériaux ferreux, non-ferreux et/ou synthétiques, et est dimenslonné de façon à obtenir une vitesse élevée de transit mais de faibles chutes de pression.

8. Epurateur d'air selon la revendication 1, **caractérisé en ce qu'**il comprend un générateur de turbulences sur le côté d'aspiration de l'air avec une configuration permettant de créer des conditions spéciales de turbulence en aval dudit générateur, de façon à créer un type de contact spécial et un mélange entre les vecteurs d'air/eau et à minimiser les chutes de pression dues au passage de la veine d'air à traiter à travers ledit générateur.

9. Epurateur d'air selon la revendication 1, **caractérisé en ce que** des débrumisateurs spécieux, coordonnés dans la conception de l'unité, et l'agencement des pièces à l'intérieur dudit boîtier (12), sont montés en aval desdites buses de pulvérisation (14).

10. Epurateur d'air selon la revendication 1, **caractérisé en ce qu'**il comprend des générateurs de turbulences pour des applications spéciales, lesdits générateurs ayant des configurations différentes choisies sur la base de différentes combinaisons de paramètres, telles que la vitesse de la veine d'air traitée, la pression du fluide transporté vers lesdites buses de pulvérisation, et l'équilibre des énergies assignées audit épurateur.

11. Epurateur d'air selon la revendication 1, **caractérisé en ce que** lesdites buses de pulvérisation (14) sont regroupées en blocs, configurés selon les besoins de l'application finale.

12. Epurateur d'air selon la revendication 1, **caractérisé en ce qu'**il a une forma cylindrique.
